**Europäisches Patentamt**

**European Patent Office**

**Office européen des brevets**

(19)

(11) Veröffentlichungsnummer : **0 141 069**
**B1**

(12) **EUROPÄISCHE PATENTSCHRIFT**

(45) Veröffentlichungstag der Patentschrift :
15.03.89

(51) Int. Cl.⁴ : **B 60 T 1/093**, F 16 D 57/06

(21) Anmeldenummer : **84109266.1**

(22) Anmeldetag : **04.08.84**

(54) **Hydraulische Bremse für Fahrzeuge.**

(30) Priorität : **29.08.83 DE 3331064**

(43) Veröffentlichungstag der Anmeldung :
**15.05.85 Patentblatt 85/20**

(45) Bekanntmachung des Hinweises auf die Patenterteilung : **15.03.89 Patentblatt 89/11**

(84) Benannte Vertragsstaaten :
**AT BE CH DE FR GB IT LI LU NL SE**

(56) Entgegenhaltungen :
**CH--A-- 425 366**
**DE--A-- 3 151 456**
**DE--A-- 3 212 359**
**DE--B-- 2 322 446**
**US--A-- 2 270 222**

(73) Patentinhaber : **Obstfelder, Günther**
**Panoramastrasse 28**
**D-6940 Weinheim-Lützelsachsen (DE)**

(72) Erfinder : **Obstfelder, Günther**
**Panoramastrasse 28**
**D-6940 Weinheim-Lützelsachsen (DE)**

(74) Vertreter : **Mierswa, Klaus, Dipl.-Ing.**
**Tullastrasse 19**
**D-6800 Mannheim 1 (DE)**

**Beschreibung**

Die Erfindung betrifft eine hydraulische Bremse für Fahrzeuge, insbesondere Radbremse für Kraftfahrzeuge, mit einer Zahnradpumpe in einem Kreislauf für eine hydraulische Bremsflüssigkeit mit zwei innerhalb eines Gehäuses druckdicht kämmenden Zahnrädern, wobei ein erstes Zahnrad von der abzubremsenden Welle, insbesondere dem abzubremsenden Rad, antreibbar ist, mit einem Reservoir für die Bremsflüssigkeit und mit einem Ventil in dem Kreislauf zum Verändern des zirkulierenden Flüssigkeitsstromes unter Abbremsen des Fahrzeuges und unter Umwandlung der kinetischen Energie desselben in potentielle Energie in Form von erhöhtem Druck der Bremsflüssigkeit und anschließender Abgabe der Wärmeenergie an die Atmosphäre.

Eine Bremse vorgenannter Art ist in der CH-A-425 366 offenbart und zeichnet sich durch eine hohe Bremsleistung aus. Eine solche Bremse ist aber aufgrund ihrer Abmessungen und ihres Gewichtes als Kraftfahrzeugbremse nicht geeignet, insbesondere nicht für eine Kraftfahrzeugbremse mit Antiblockier-System.

Die entscheidenden Nachteile der heutigen Kraftfahrzeugbremsen bestehen darin, daß die Bremse per se ein Verschleißteil ist, und daß dieses Verschleißteil zusätzlich umweltbelastend ist. Praktisch sämtliche Bremsbeläge enthalten Asbestfasern, die beim Bremsvorgang abgerieben und ins Freie gesetzt werden. Deshalb trägt der Abrieb der heutigen Fahrzeugbremsen erheblich zur Umweltbelastung durch feinste Asbestartikel und durch Schwermetalle herrührend von den Scheiben und Trommeln der Bremsen bei. Ebenso sind auch die Kosten während der Lebensdauer eines Fahrzeuges, die durch den Verschleiß der Bremse eintreten, erheblich.

Des weiteren ist ein Antiblockier-System bekannt, welches auf elektronischem Wege das Blockieren der Räder beim Bremsvorgang verhindern soll, wobei beim Bremsvorgang die Bremsbacken kurz vor dem Stillstand des Rades wieder etwas gelöst werden, um das Weiterdrehen des Rades gegen die Reibungskräfte zu erreichen. Das bekannte AntiblockierSystem hat dabei eine feste Schließ- und Öffnungsfrequenz von ca. 10 Hz, die sich unangenehm durch Rattern bemerkbar machen. Daneben benötigt das Antiblockier-System einen großen elektronischen und elektromagnetischen-hydraulischen Aufwand, der das System teuer und deshalb nur für einen kleinen Kreis von Fahrzeugen einsetzbar macht. Abgesehen davon ist dieses System höchst störanfällig, was durch seine Kompliziertheit bedingt ist.

Der Erfindung liegt die Aufgabe zugrunde, eine kompakte, leichte und verschleißfreie Bremse, insbesondere für Kraftfahrzeuge, zu schaffen, die auch für ein Antiblockier-System geeignet sein soll.

Diese Aufgabe wird erfindungsgemäß durch die im kennzeichnenden Teil des Anspruchs 1 angegebenen Merkmale gelöst.

Eine zweckmäßige Ausgestaltung der Bremse besteht in den Merkmalen des Anspruchs 2.

Eine weitere vorteilhafte Ausgestaltung der Erfindung als hydraulische Bremse mit Antiblockier-System besteht in den kennzeichnenden Merkmalen des Anspruchs 3, eine höchst vorteilhafte Ausgestaltung dieser Bremse mit Sperrdifferential besteht in den kennzeichnenden Merkmalen des Anspruchs 5. Weitere Ausgestaltungen der Erfindung sind in den übrigen Unteransprüchen gekennzeichnet.

Die erfindungsgemäße hydraulische Bremse besitzt den hervorstechenden Vorteil, daß sie praktisch keinen Verschleiß mehr aufweist und insbesondere keinerlei Abriebpartikel an die Atmosphäre abgibt. Die erfindungsgemäße Bremse ist ein völlig in sich geschlossenes System, die sehr umweltfreundlich ist. Da diese Bremse praktisch keinem Verschleiß unterliegt, ist die Lebensdauer dieser Bremse enorm größer als diejenige der sich abnützenden Teile heutiger Bremsen. In höchst vorteilhafter Weise entfallen die heute notwendigen Aggregate wie Bremshilfe, Bremskraftverstärker, Trommeln oder Scheiben und die zugehörigen Bremsbacken. Desweiteren kann mit Vorteil des vorhandene hydraulische System, bestehend aus Hauptbremszylinder und dessen Betätigungsleitung, zur Betätigung des Schiebers oder des Kolbens der erfindungsgemäßen Bremse benützt werden. Da der Schieber oder der Kolben nur gegen einen geringen Druck verschoben werden muß, können die dafür notwenidigen Hydraulikzylinder und Zuführleitungen kleiner und somit billiger ausgelegt werden. Aufgrund des Einsatzes der erfindungsgemäßen Bremse entfallen somit eine Reihe von heute notwendigen Aggregaten.

In vorteilhafter Weise erfolgt die Wärmeabfuhr der beim Bremsvorgang innerhalb der hydraulischen Bremsflüssigkeit entstandenen Wärmeenergie durch die Abgabe der Wärmeenergie an das Gehäuse und danach an die Atmosphäre. In vorteilhafter Weise kann aber auch eine Wasserkühlung des Gehäuses vorgesehen werden, wobei das Gehäuse in einen Kühlkreislauf angeordnet ist. Die Wärmeenergie innerhalb der hydraulischen Flüssigkeit wird somit an das Gehäuse und von dort an das Kühlmedium des Kühlkreislaufes abgegeben, von wo die Wärme an die Atmosphäre abgegeben wird.

Der besondere Vorteil der erfindungsgemäßen hydraulischen Bremse liegt in der Ausgestaltung derselben als Differentialbremse mit Antiblockier-System gemäß dem Verfahren des Unteranspruchs 10. Bei dieser Ausgestaltung kann die Bremse gleichzeitig bei der Beschleunigung des Fahrzeugs als « weiches » Sperrdifferential verwendet werden, wobei « weich » bedeutet, daß zwischen den Rädern ein geringfügiger Schlupf zur besseren Anpassung zulässig ist.

Eine derartige erfindungsgemäße Differentialbremse besitzt ein elektro-hydraulisches ABS mit hoher Schaltfrequenz, die geschwindigkeitsproportional ist. Die Schaltfrequenz wird dabei bestimmt von der Anzahl der Querbohrungen innerhalb des Zahnrades und der jeweiligen Geschwindigkeit desselben. Damit liegt die Schaltfrequenz um ein Vielfaches höher als die Schaltfrequenz des heute bekannten ABS, die dazu fest ist. In höchst vorteilhafter Weise entfallen sämtliche heute notwendigen Ventile, Ventilsteuerungen und Zubehör. Dazu geschieht die Frequenzerzeugung trägheitslos. Die Einschaltdauer wird dabei über Geschwindigkeitsvergleich sämtlicher Räder untereinander in einem Rechner- und Regelschaltkreis elektronisch gewonnen, wobei hierzu in vorteilhafter Weise als Steuerimpulse die Schaltfrequenz der vorbeilaufenden Zähne eines Förderzahnrades an einen Sensor benützt werden. Damit wird eine hohe Auflösung für die Differenzbildung erzielt. Stellt nun der Rechner- und Regelschaltkreis eine Abweichung fest, beispielsweise wird ein Rad beim Bremsvorgang zu stark abgebremst und läuft deshalb langsamer als die übrigen, so wird die Steuerwelle nur in Durchlaßrichtung gedreht, womit zwangsläufig das ABS seine Wirkung entfaltet. Ist die Differenz Null, so fällt die Steuerwelle in ihre Ausgangslage zurück, das ABS wird zwangsläufig abgeschaltet, es wirkt nur noch das Bremssystem des Kolbens.

Zur Verhinderung des Blockierens der Räder bei einer Vollbremsung wird die jeweilige Geschwindigkeit festgestellt und dem Mikroprozessor des Regelschaltkreises eingegeben, der deshalb weiß, aus welcher Geschwindigkeit heraus eine Vollbremsung eingeleitet wird. Über ein Software-Programm wird dann die Abbremsung eines jeden Rades nur über den Kolben bis zu einer bestimmten unteren Frequenz zugelassen. Bei Erreichen dieser unteren Frequenz wird die Bremse über das ABS kurzzeitig geöffnet, die nunmehr erreichte Fahrzeuggeschwindigkeit ist wiederum Ausgangsgeschwindigkeit für den nächsten Bremszyklus. Auf diese Weise kann das erfindungsgemäße ABS geringere Radgeschwindigkeiten vor dem Blockieren zulassen, als die heutigen ABS des Standes der Technik. Hinzu kommt, daß mit abnehmender Geschwindigkeit beim Bremsvorgang, insbesondere bei einer Vollbremsung, über Software dieser Grenzwert, bei der also die Bremse über ABS kurzzeitig geöffnet werden muß, bei jedem Zyklus, ausgehend von der soeben erreichten Fahrzeuggeschwindigkeit, weiter nach unten gefahren werden kann. Deshalb kann das erfindungsgemäße ABS die Blockierschwelle entsprechend der momentanen Geschwindigkeit des Fahrzeugs und der Impulsfrequenz der jeweiligen Bremse zu immer kleineren Werten herunter regeln.

Fällt die Geschwindigkeit des Fahrzeugs unter einen vorgegebenen Wert, so kann in vorteilhafter Weise der ABSFrequenz eine intermittierende Schaltfrequenz durch die Steuerwelle überlagert werden. Dazu wird die Steuerwelle mit einer Frequenz von einigen 10 Hz intermittierend von der Schließ- in die Öffnungsstellung gedreht, wodurch in höchst vorteilhafter Weise das Antiblockier-System bis fast herunter zur Geschwindigkeit Null, also bis nahezu zum Stillstand des Fahrzeugs, wirkt. Dadurch ist ein ABS geschaffen, welches gerade in kritischen Situationen bei langsamer Fahrt, wie z. B. auf Glatteis, voll wirksam ist.

Des weiteren ist die erfindungsgemäße Bremse gleichzeitig ein Sperrdifferential mit begrenztem Schlupf und ABS. Dazu besitzt die Steuerwelle einen doppelten Durchgang, ebenso der Kolben. Der eine Durchgang durch Steuerwelle und Kolben dient bei Schaltung als Sperrdifferential und ist in Ruhestellung immer offen. Der andere Durchgang dient bei Schaltung als ABS und ist in Ruhestellung immer geschlossen.

Ein weiterer Vorteil besteht darin, daß nunmehr zum ersten Mal eine Bremse mit ABS und Sperrdifferential geschaffen wurde, bei der die unterschiedliche Geschwindigkeit zweier paralleler Räder ausgeglichen werden kann.

Die Erfindung stellt somit zum ersten Male eine hydraulische Bremse mit Sperrdifferential, vorzugsweise weichem Sperrdifferential, zur Verfügung, die praktisch verschleißfrei und sehr umweltfreundlich ist und die insbesondere ein hydraulisches Antiblockier-System mit geschwindigkeitsabhängiger Schaltfrequenz aufweist. In höchst vorteilhafter Weise kann dazu die Vorrichtung als Sperrdifferential mit begrenztem Schlupf und ABS verwendet werden. Bei dem heute bekannten ABS kann das Beschleunigungsverhalten eines Fahrzeugs nicht berücksichtigt werden. Die erfindungsgemäße Hydrobremse wird deshalb entscheidend zur Verbesserung der Sicherheit und des Fahrverhaltens künftiger Automobile beitragen. Die erfindungsgemäße Bremsvorrichtung arbeitet — im Gegensatz zu den bekannten Fahrzeugbremsen — nicht druckabhängig, sondern wegabhängig, weshalb sie schon deshalb differenzierter ansprechen kann.

Beispiele der Erfindung sind in der Zeichnung dargestellt und anschließend beschrieben. Dabei zeigen :

Figur 1 einen Radialschnitt durch eine erfindungsgemäße hydraulische Differentialbremse und -sperrgetriebe in Bremsstellung

Figur 2 einen Schnitt längs der Linie A-A in Figur 1

Figur 3 einen zentralen Längsschnit durch das vordere Ende des Kolbens

Figur 4 a, b zwei übereinander liegende Querschnitte durch die Durchlaßschlitze der Steuerwelle bei gleichem Drehwinkel mit Teil des Kolbens wegen dessen Sperrflächen

Figur 5 einen zentralen Längsschnit durch die hydraulische Differentialbremse und das Differentialsperrgetriebe gemäß Figur 1 zur Darstellung des Strömungsweges innerhalb der Bremse, des Zylinders, des Kolbens und der Steuerwelle

Figur 6 einen Ausschnitt des Zylinders im Bereich B-B von Figur 5 in Draufsicht und

Figur 7 eine weitere Ausführung einer hydraulischen Bremse mit kontinuierlich regelbarer Fördermenge.

Die einfachste Ausführung einer erfindungsgemäßen hydraulischen Bremse besteht aus einer Zahnradpumpe, die über eine geschlossene Zirkulationsleitung verfügt. Von einem Reservoir aus - der Unterdruck-Reservoirraum- wird hydraulische Bremsflüssigkeit über die Zahnradräume zwischen den Zähnen des einen Zahnrades in einen Druckraum gefördert. Der Druckraum und der Unterdruckraum sind miteinander über eine Druck-Rückleitung miteinander verbunden, wobei sich innerhalb dieser Druck-Rückleitung ein Ventil mit einem Schieber befindet. Diese Rückleitung befindet sich nun innerhalb der drehachse eines der beiden Zahnräder.

Beim Bremsvorgang drosselt der Schieber den Ventildurchgang mehr oder weniger ab, dementsprechend wird die Förderung des Förderstromes verringert und die Zahnräder abgebremst.

Die Figuren zeigen eine hydraulische Differentialbremse mit Antiblockier-System, wobei diese Bremse ebenfalls als Sperr-Differentialgetriebe mit Antiblockier-System geschaltet werden kann, diese Stellung ist die Ruhestellung.

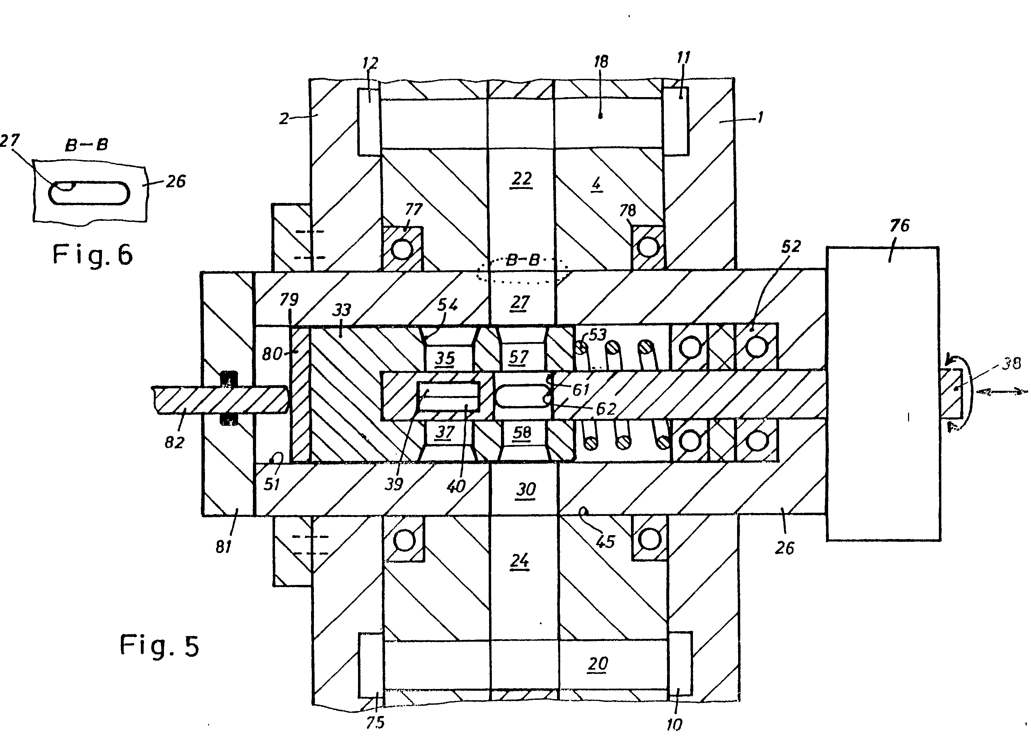

Die Hydrobremse besteht aus zwei Gehäuseschalen 1, 2, in denen nach Art einer Zahnrad-Hydropumpe zwei Zahnräder 3, 4 druckdicht angeordnet sind. Das Zahnrad 3 ist z. B. direkt auf die Radachse 5 montiert, das Zahnrad 4 ist drehbar um einen feststehenden Zylinder 26 gelagert, der die Gehäuseschalen 1, 2 beidendig durchsetzt (Figur 5). Die Zahnräder 3, 4 kämmen mit ihren Zahnkränzen 48, 50, wobei sich bei Rotation des Zahnrades 4 im Gegenuhrzeigersinn unterhalb des Berührungspunktes der Zahnräder ein Druckraum 43 und oberhalb des Berührungspunktes ein Unterdruckraum 44 ausbildet. Das Gehäuse weist in seinem oberen Teil eine Aussparung 13 auf, in die von oben ein Einfüllstutzen 14 hineinragt, der mittels Mutter 15 verschlossen ist. Das Gehäuse ist mit einer Bremsflüssigkeit gefüllt, dessen Flüssigkeitsspiegel 16 bis innerhalb des Stutzens 14 unter Belassung eines Luftpolsters 17 reicht. Dieses Luftpolster dient zum Druckausgleich, beispielsweise Temperaturschwankungen.

Im oberen Bereich der Zahnräder 3, 4, die die Förderräder darstellen, sind je ein Dosier-Zahnrad 6, 7 angeordnet, die zum Dosieren des von den Förderzahnrädern 3, 4 geförderten Flüssigkeitsvolumens dient. Diese Dosierzahnräder 6, 7 sind ebenfalls druckdicht innerhalb des Gehäuses angeordnet.

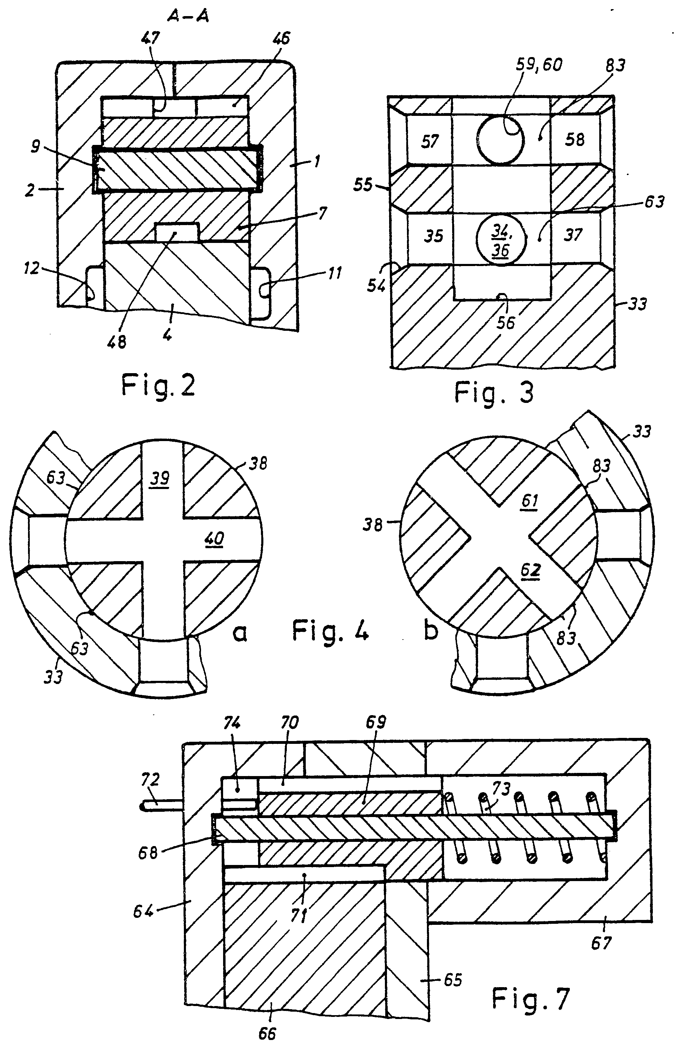

Gemäß Figur 2 ist das Dosierzahnrad 7 um eine Welle 9 drehbar gehalten, die geeignet in den Gehäuseschalen 1, 2 gelagert ist. Der Zahnkranz 46 des Dosierzahnrades 7 weist eine peripher umlaufende Aussparung 47, beispielsweise einen Einstich, auf, der ein Durchlaßfenster für die Bremsflüssigkeit darstellt. Wenn das Dosierzahnrad mit dem Förderzahnrad 4 kämmt, so wird im Einlaufbereich nur die Fördermenge entsprechend dem Querschnitt der Aussparung 47 durchgelassen ; nur diese Fördermenge läuft dann zwischen den Zahnflanken der Zahnkränze 46, 48 mit. Deshalb ist in Figur 2 im unteren Bereich der Aussparung 47 die (nicht geschnittene) Zahnflanke des entsprechenden Zahnrades des Zahnkranzes 48 des Förderzahnrades 4 zu sehen.

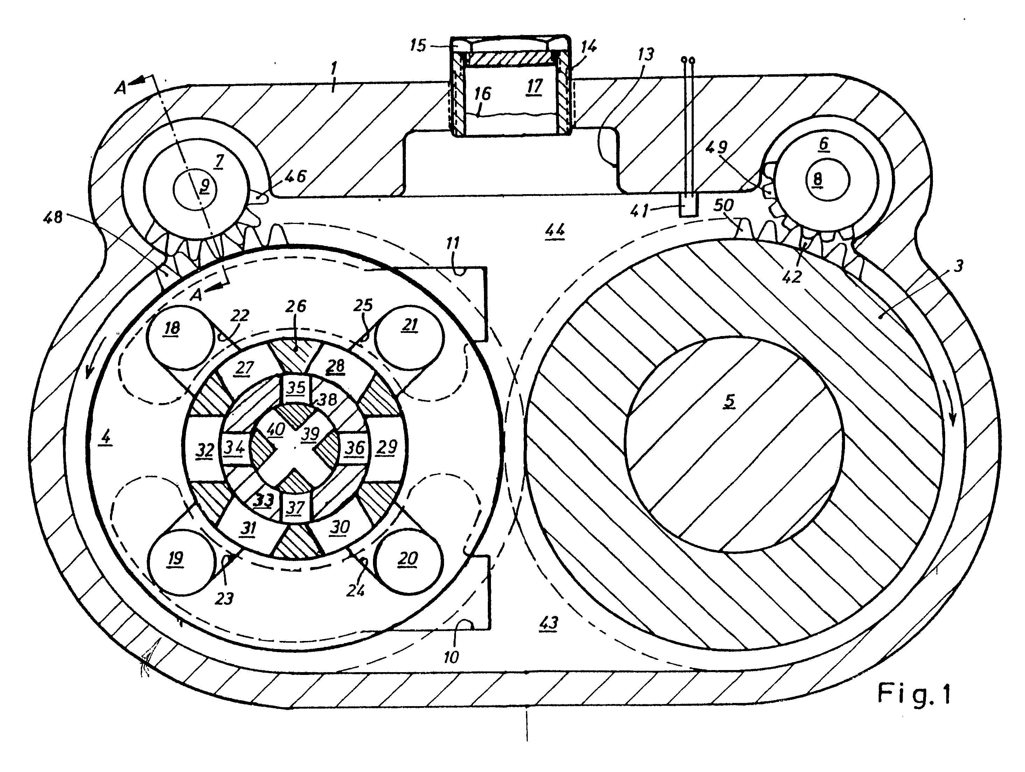

In Figur 1 ist eine weitere Dosiermöglichkeit mittels des Dosierzahnrades 6 dargestellt. Dieses Dosierzahnrad 6 ist wiederum um eine Welle 8 drehbar gehalten, die geeignet in den Gehäuseschalen 1, 2 gelagert ist. Die Zähne des Zahnkranzes 49 des Dosierrades 6 besitzen eine geringere Höhe als die Zähne des Zahnkranzes 50 des kämmenden Förderzahnrades 3. Beim ansonsten druckdichten Abwälzen der Zahnkränze 49, 50 verbleibt zwischen den Zahnflanken der Zähne des Zahnkranzes 50 jeweils ein Zwischenraum 42, der mit Bremsflüssigkeit gefüllt ist. Auf diese Weise wird auch durch das antreibende Zahnrad 3 eine gewisse Menge an Bremsflüssigkeit gefördert, die zum einen zur Schmierung des Zahnrades 3 innerhalb der Gehäuseschalen 1, 2 dient, zum anderen zur Kühlung, um insbesondere eine günstige Verteilung der Bremsflüssigkeit innerhalb des Gehäuses zu erreichen.

Gemäß den Figuren 1 und 5 besitzt das Zahnrad 4 in der Nähe seines Fußkreises eine Mehrzahl von in äquidistanten Abständen angeordneten Durchgangslöchern, beispielsweise vier Querbohrungen 18, 19, 20, 21, in die Radialbohrungen 22, 23, 24, 25 einmünden. Im Herstellungsprozeß wurden diese Radialbohrungen, ausgehend vom Kopfkreis des Zahnrades 4 durchgebohrt (Figur 5), der obere Teil jeder Radialbohrung oberhalb der Querbohrung wurde verschlossen. Auf diese Weise entsteht die in Figur 5 gezeigte Ausbildung der T-förmigen Querbohrungen und der diese durchsetzende Radialbohrungen ; diese Radialbohrungen münden in eine Mittelbohrung 45 des Zahnrades 4.

Durch die Gehäuseschalen 1, 2 und durch die Mittelbohrung 45 des Zahnrades 4 ist ein Zylinder 26 gesteckt, der fest mit dem Gehäuse verbunden ist. Gleichzeitig ist dieser Zylinder 26 die Achse des Zahnrades 4, wobei dieses Kugellager 77, 78 aufweist, die innerhalb der Mittelbohrung 45 sitzen, mit denen sich das Zahnrad 4 um den Zylinder 26 dreht. Das Zahnrad 4 ist gegenüber dem Zylinder 26 druckdicht abgedichtet.

Der Zylinder 26 ist ein Hohlzylinder und weist eine Längsmittelbohrung 51 auf, die beispielsweise eine Sackbohrung sein kann. Im Bereich der Radialbohrungen 22 bis 25 innerhalb des Zahnrades 4 besitzt der Zylinder 26 eine Anzahl von Löchern, die größer ist, als die Anzahl der Quer- bzw. Radialbohrungen innerhalb des Zahnrades 4. Beispielsweise besitzt der Zylinder 26 sechs radial geführte, parallel zur Längsachse des Zylinders gerichtete Schlitze 27, 28, 29, 30, 31, 32, die in äquidistanten Abständen in einer Querschnittsebene liegen und durchgehend bis zur Längsbohrung 51 geführt sind.

Die radialen Löcher innerhalb des Zylinders sind vorteilhafterweise Schlitze (Figur 6), so daß bei Vorbeilauf der Mündung einer Radialbohrung des Zahnrades 4 die durch die Mündung des Schlitzes 27 freigegebene Fläche praktisch linear anwächst. Die Anzahl und die Querschnittsfläche der Löcher 27 bis 32 innerhalb des Zylinders 26 ist dabei so gehalten, daß bei Drehung des Zahnrades 4 bei jedem Drehwinkel ein Durchfluß durch mindestens ein Loch des Zylinders 26 durch mindestens eine Radialbohrung innerhalb des Zahnrades 4 gewährleistet ist.

Innerhalb der Längsbohrung 51 des Zylinders 26 ist ein Kolben 33 verschieblich gegen die Kraft einer Druckfeder 53 angeordnet, die sich innerhalb der Bohrung 51 des Zylinders 26 befindet. Der Kolben 33 weist an seinem einen Ende eine Druckplatte 80 auf, der Zylinder 26 ist am kolbenseitigen Ende mit einem Zylinderdeckel 81 verschlossen, durch den eine Schubstange 82 auf die Druckplatte 80 aufsteht. Diese Schubstange 82 kann nun mittels bekannter hydraulischer oder pneumatischer Einrichtungen bewegt werden, um den Kolben 33 entgegen der Kraft der Feder 53 innerhalb der Bohrung 51 zu verschieben.

Der Kolben 33 besitzt gemäß der Figur 3 vorzugsweise eine zentrisch geführte Sackbohrung 56, radial zu dieser Bohrung 56 sind in denselben Längsschnittebenen liegende Durchgangslöcher übereinander in äquidistanten Abständen angeordnet. Diese Durchgangslöcher entsprechen in ihrer Anzahl der Anzahl der Radialbohrungen 22 bis 25 des Zahnrades 4. Beispielsweise sind hier die Löcher je vier symmetrisch übereinanderliegende Bohrungen 34, 35, 36, 37 und 57, 58, 59, 60. Die Bohrungen können von der Mantelwandung des Kolbens ausgehende Einsenkungen 54 aufweisen. Zwischen den Radialbohrungen 34 bis 37 und den Radialbohrungen 57 bis 60 besteht ein solcher Abstand, daß zwischen den Mündungen eine umlaufende, geschlossene ringförmige Manteldeckfläche 55 verbleibt. Des weiteren besitzen die Radialbohrungen, die in die Sackbohrung 56 münden, einen solchen Durchmesser, daß zwischen den Innenmündungen zweier benachbarter Radialbohrungen, beispielsweise 36, 37 oder 58, 59, je eine Sperrfläche 63, 83 verbleibt. Da die Bohrungen vorzugsweise gleich und symmetrisch sind, sind auch die Sperrflächen 63, 83 gleich groß. Die Radialbohrungen 34 bis 37 einschließlich der innen liegenden, zugeordneten Sperrflächen 63 dienen dem Bremsvorgang, die Radialbohrungen 57 bis 60 einschließlich den zugeordneten, innen liegenden Sperrflächen 83 dienen als Durchflußöffnungen in Ruhestellung des Systems, gleichzeitig dienen sie für die Benutzung des Systems als Sperr-Differentialgetriebe.

In die Sackbohrung 56 des Kolbens 33 taucht eine Steuerwelle 38 ein, die den Innenraum des Zylinders 26 durchragt, in einem Dichtlager 52 druckdicht gelagert ist und die das der Schubstange 82 gegenüberliegende Ende des Zylinders 26 durchstößt. Diese Steuerwelle 38 wird bei Bewegung des Kolbens 33 durch diesen aufgrund der Sackbohrung mitgenommen, bei Rückstellung des Kolbens 33 in die Ruhestellung 79 läuft die Steuerwelle 38 ebenfalls zurück. Auf dem stirnseitigen Ende des Zylinders 26 befindet sich ein Schrittschaltmotor 76, in den die Steuerwelle 38 ragt. Die Steuerwelle 38 kann nun über den Schrittschaltmotor 76 verdreht werden. Dazu ist die Steuerwelle in geeigneter Weise innerhalb des Schrittschaltmotors 76 gehalten, beispielsweise mittels einer Keilkupplung; auf diese Weise kann die Steuerwelle 38 sowohl translatorisch aufgrund des Kolbens 33 mitgenommen, als auch rotatorisch aufgrund des Schrittschaltmotors 76 gedreht werden.

Gemäß der Figuren 4 und 5 weist die Steuerwelle 38 in verschiedenen Querschnittsebenen liegende Durchgangslöcher auf, die vorzugsweise radial geführt sind. Die Anzahl der jeweiligen Radial-Löcher beider Querschnittsebenen ist gleich der Anzahl der Radialbohrungen innerhalb des Zahnrades 4. Beispielsweise sind die in der Figur 4 a in der ersten Querschnittsebene gezeigten Durchgangslöcher radiale Längsschlitze 39, 40, die sich rechtwinklig kreuzen und die dem Bremssystem, hier den Radialbohrungen 34 bis 37 des Kolbens 33, zugeordnet sind.

Die Durchgangslöcher der Figur 4 b der zweiten Querschnittsebene sind ebenfalls radiale Längsschlitze 61, 62, die sich rechtwinklig kreuzen und die dem Sperrdifferential, hier den Radialbohrungen 57 bis 60 des Kolbens 33, zugeordnet sind. Beide Paare von Durchlaßschlitzen 39, 40 bzw. 61, 62 sind gegenseitig um einen Winkel entsprechend der Anzahl der Durchgangslöcher verdreht, in dem hier gezeigten Beispiel somit um 45° Grad. Die in Figur 5 gezeigte Stellung der Steuerwelle 38 und des Kolbens 33 und des Zylinders 26 gegenüber dem Zahnrad 4 ist die Ruhestellung des Systems, in diesem Falle korrespondieren die Durchgangsschlitze 61, 62 mit den Radialbohrungen 57 bis 60 des Kolbens 33.

Die Steuerwelle 38 kann nun mittels des Schrittschaltmotors 76 dergestalt verdreht werden, daß die Mündungen der Durchgangsschlitze 39, 40 mit den Radialbohrungen 57 bis 60 des Kolbens 33 korrespondieren, das ist die Ruhestellung des Systems. Wird hingegen die Steuerwelle 38 bei dem hier gezeigten Beispiel um 45° Grad gedreht, so verschließen die Sperrflächen 83 die Durchgangsschlitze 39, 40, der Durchlaß durch den Kolben 33 ist unterbrochen.

In gleicher Weise sind die Durchgangsschlitze 61, 62 den Bohrungen 34 bis 37 des Kolbens 33 zugeordnet. In der in Figur 5 gezeigten Ruhestellung verschließen die Sperrflächen 63 die Mündungen der Durchgangsschlitze 61, 62; wird die Steuerwelle 38 um 45° Grad gedreht, so korrespondieren die Mündungen der Durchgangsschlitze 61, 62 mit den Radialbohrungen 34 bis 37. Allerdings wird der eben beschriebene Durchgang nur aktiv, sobald der Kolben 33 in die Bremsstellung geschoben wird und dabei die Steuerwelle 38 mitnimmt.

Bei nicht betätigter Bremse fördern beide Zahnräder 3, 4 eine bestimmte Menge an Bremsflüssigkeit hin zum Druckraum 43. Gleichzeitig fließt ein Rückstrom vom Druckraum 43 über die Nuten 10, 75 innerhalb der Gehäusedeckel 1, 2, die Querbohrung 20 und die Radialbohrung 24 des Zahnrades 4, den radialen Schlitz 30 des Zylinders 26, die Radialbohrung 58 des Kolbens 33, den Durchgangsschlitz 61 der Steuerwelle 38, die Radialbohrung 57 des Kolbens 33, den radialen Schlitz 27 des Zylinders 26, die Radialbohrung 22 und die

5

Querbohrung 18 des Zahnrades 4, über die Nuten 11, 12 innerhalb der Gehäuseschalen 1, 2 zurück zum Unterdruckraum 44, womit der Flüssigkeitskreislauf geschlossen ist.

Wird nun der Bremsvorgang eingeleitet, so wird der Kolben 33 über die Schubstange 82 in Figur 5 von links nach rechts gegen die Kraft der Druckfeder 53 bewegt. Dabei werden die Radialbohrungen 57 bis 60 innerhalb des Kolbens 33 außer Durchgang mit den radialen Schlitzen 27 bis 32 des Zylinders 26 geschoben. Die ringförmige Mantelfläche 55 beginnt, die Schlitze 27 bis 33 abzudecken. Bei der weiteren Bewegung des Kolbens 33 korrespondieren schließlich die Radialbohrungen 34 bis 37 des Kolbens 33 mit den Schlitzen 27 bis 32 des Zylinders 26. Da die Steuerwelle 38 bezüglich der Radialbohrungen 34 bis 37 des Kolbens 33 in Sperrichtung gedreht ist, wird somit der Flüssigkeitsstrom durch den Kolben 33 unterbrochen, im Druckraum 43 baut sich ein Überdruck auf, der die Rotation der Zahnräder 3, 4 abbremst und schließlich stillsetzt. Diese Bremsstellung ist in Figur 1 gezeigt.

Beim Bremsvorgang kann nunmehr das Antiblocker-System aufgrund der Drehung der Steuerwelle 38 wirksam gemacht werden. Ein (nicht gezeigter) zentraler Rechner- und Regelschaltkreis erhält neben der jeweiligen Absolutgeschwindigkeit des Fahrzeugs über einen Impulsgeber 41 in jeder Bremse eine Impulsfolge entsprechend der vorbeilaufenden Zähne des Zahnkranzes 50 des Zahnrades 3. Durch Vergleich der Impulsfrequenzen der einzelnen Bremsen untereinander stellt der Rechner- und Regelschaltkreis fest, ob alle Räder gleich schnell laufen. Wird eine Differenz ermittelt, beispielsweise ist ein Rad langsamer, was bedeutet, daß die zugehörige Bremse zu stark bremst, so wird über einen Stellimpuls der Schrittschaltmotor 76 angesteuert. Dieser dreht nun die Steuerwelle 38 innerhalb kürzester Zeit von der Ruhestellung um 45° Grad in die Endstellung, so daß der Durchgang durch den Kolben 33 freigegeben wird. Wird keine Differenz mehr festgestellt, so stellt der Schrittschaltmotor 76 ab, die Steuerwelle 38 dreht augenblicklich, vorzugsweise über eine nicht gezeigte mechanische Feder, in ihre Ruhelage zurück, der Durchgang durch den Kolben 33 wird wieder verschlossen. Die Rückdrehung der Steuerwelle 38 kann natürlich auch über den Schrittschaltmotor 76 erfolgen.

Aufgrund dieser Tatsache wird in höchst vorteilhafter Weise ein Antiblockier-System geschaffen, welches eine geschwindigkeitsproportionale ABS-Frequenz besitzt. Denn diese Frequenz ergibt sich aus der Anzahl der Radialbohrungen innerhalb des Zahnrades 4 und der Geschwindigkeit. Die Genauigkeit der Differenz-Feststellung zwischen zwei Rädern kann dabei mit hoher Auflösung erfolgen, beispielsweise entsprechend der Zähnezahl eines Förderzahnrades. Zu Beginn des Ausgleichs einer Differenz braucht die Steuerwelle nur in Durchlaßrichtung gedreht, zu Ende des Differenzausgleichs nur zurückgedreht werden. Während dieser Zeit ist eine ABS-Frequenz überlagert, entsprechend dem Vorbeilauf der Radialbohrungen 22 bis 25 des Zahnrades über den Radialbohrungen 34 bis 37 des Kolbens 33. Es sei daran erinnert, daß entsprechend der grösseren Anzahl von Löchern innerhalb des Zylinders 26 dieser gegenüber dem Zahnrad 4 immer durchlässig ist.

Auf diese Weise können schon geringste Abweichungen der Geschwindigkeiten der Räder untereinander zum frühesten Zeitpunkt über das ABS ausgeglichen werden. Gleichzeitig ist dem Rechner- und Regelschaltkreis eine untere Grenzgeschwindigkeit vor dem Blockieren eingegeben, bei der das ABS eingeschaltet wird, auch wenn vorher eine Abweichung nicht aufgetreten sein sollte. Diese Grenzgeschwindigkeit kann nun softwaremäßig von hohen Geschwindigkeiten zu niedrigeren Geschwindigkeiten festgelegt sein, so daß nach jedem ABS-Schaltgang ein Geschwindigkeitsvergleich bzw. Frequenzvergleich zwischen sämtlichen Bremsen stattfindet. Diejenige Bremse, die nunmehr im Vergleich zu den übrigen zu langsam dreht, bzw. die die vorgegebene Bremsgeschwindigkeit vor dem Blockieren erreicht hat, wird kurzzeitig auf ABS geschaltet, wodurch gemäß der ABS-Frequenz wiederum ein Durchfluß durch den Kolben 33 stattfindet. Auf diese Weise wird ein elektrohydraulisches Antiblockier-System erhalten, bei dem die Antiblockier-Frequenz nur über masselose Schließvorgänge hydraulisch, die Verdrehung der Steuerwelle 38 hingegen elektrisch oder hydraulisch oder sonstwie erfolgt. Dabei ist dieses ABS bis gegen Null, also bis zum Stillstand des Fahrzeugs, wirksam.

Weil die ABS-Schaltfrequenz geschwindigkeitsproportional ist, ist es vorteilhaft, unterhalb einer vorgegebenen Geschwindigkeit nunmehr der niedrigen ABS-Frequenz eine höhere Schaltfrequenz der Steuerwelle 38 per Software intermittierend zu überlagern. Damit wirkt dieses Antiblockier-System exakt bis gegen Null, also auch genau dann, wenn beispielsweise ein Rad beim Bremsen auf Glatteis steht oder das Fahrzeug bei geringen Geschwindigkeiten bei Glatteis ins Schleudern kommt. Diese überlagerte Schaltfrequenz der Steuerwelle 38 kann entsprechend dem gewählten Schrittschaltmotor 76 noch mindestens bei einigen 10 Hz liegen.

Die gezeigte Vorrichtungwirkt in der in Figur 5 gezeigten Stellung gleichermaßen als « weiches » Sperrdifferential. Wie oben geschildert, ist in Ruhestellung der Durchgang durch den Kolben 33 über die Radialbohrungen 57 bis 60 und die Schlitze 61, 62 der Steuerwelle 38 immer geöffnet. Wird nun beim Beschleunigen eine unterschiedliche Geschwindigkeit zweier Räder festgestellt, so wird das schneller laufende Rad dadurch abgebremst, daß die Steuerwelle 38 mittels des Schrittschaltmotors 76 um 45° Grad gedreht und dadurch der Durchgang durch den Kolben 33 geschlossen wird. Ist die Geschwindigkeit der Räder untereinander wieder gleich, so fällt der Schrittschaltmotor 76 ab, die Steuerwelle 38 wird augenblicklich in ihre Ruhelage zurückgedreht und gibt den Durchfluß wieder frei. Dabei geschieht der Schaltvorgang durch den Schrittschaltmotor 76 vorteilhafterweise in mehreren Stufen entsprechend der vom Rechner- und Regelschaltkreis festgestellten Größe der Geschwindigkeitsdifferenz. Damit wirkt die Vorrichtung wie ein geregeltes selbstsperrendes Differential mit nicht starrer Verriegelung mit analoger Regelung der Verzögerungskraft. Muß nun auf Bremsen umgeschaltet werden, so steht sofort das hydraulische Bremssystem aus Kolben 33 und Steuerwelle 38 zur Verfügung.

In vorteilhafter Weise kann nunmehr der Schrittschaltmotor auch dafür eingesetzt werden, das ABS nicht nur ein- und auszuschalten, sondern gemäß den errechneten Notwendigkeiten in Stufen zu schalten. Die Stufenschaltung des Schrittschaltmotors 76 kann deshalb auch vorteilhaft für eine weitere Feinregulierung des ABS eingesetzt werden.

Desweiteren kann in vorteilhafter Weise von der Lenkung, gegebenenfalls auch zusätzlich von der Geschwindigkeit des Fahrzeugs, ein Analog- oder Digitalsignal abgenommen werden, welches zur Beeinflussung des Kurvenverhaltens des Fahrzeugs verwendet wird, um bei Kurvenfahrten von der zulässigen Geschwindigkeitsdifferenz abweichende Räder, sei es der treibenden oder der getriebenen, anzupassen. Dazu sind die beiden Funktionsstellungen der Steuerwelle « Bremsen mit Kolben und ABS » und « Beschleunigen als geregeltes selbstsperrendes Differential mit nicht starrer Verriegelung » voneinander unabhängig und beeinflussen sich nicht. Ausführungsgemäß kann dazu die Steuerwelle in zwei unabhängige Steuerwellen aufgeteilt sein, die jede einen Schrittschaltmotor trägt. Oder der Schrittschaltmotor besitzt eine Mittelstellung mit einer einzigen Steuerwelle, deren Durchgänge derart plaziert sind, daß bei Betätigung der Bremsfunktion des Sperrdifferentials die geschlossene Stellung der Durchgänge der Steuerwelle bezüglich « Bremsen mit Kolben und ABS » verschlossen bleiben. Bei Aktivierung der Steuerwelle bezüglich Sperrdifferential bleibt somit die Steuerwelle bezüglich Bremsen mit Kolben und ABS inaktiv, unabhängig davon, daß der Kolben sowieso inaktiv ist. Das kann durch bestimmte geometrische Anordnung der Durchgänge der Steuerwelle zu den Durchgängen innerhalb des Kolbens und des Zylinders erreicht werden.

Durch dieses Verfahren gemäß dem Anspruch 13 und der zugehörigen Anordnung der Steuerwelle kann bei Kurvenfahrten auf dem oder den Innenrädern eine Bremskraft entsprechend dem Lenkausschlag und gegebenenfalls der Geschwindigkeit erzeugt werden. Zusätzlich kann dieser Bremskraft nun die normale Bremskraft über die Bremsfunktion « Bremsen mit Kolben und ABS » überlagert werden.

Dadurch kann entsprechend den Erfordernissen eine differenzierte Bremskraft auf die treibenden und/oder getriebenen Räder aufgegeben werden. Dadurch kann immer die optimale Haftreibung für jedes Rad eingeregelt werden.

Für bestimmte Anwendungsfälle kann es nützlich sein, daß der Förderstrom durch die Bremse regelbar ist. In Figur 7 ist beispielsweise eine derartige Bremse gezeigt, bestehend aus Gehäuseschalen 64, 65, zwischen denen ein Förderzahnrad 66 mit Zahnkranz 71 druckdicht angeordnet ist, der Kopfkreis des Zahnrades 66 läuft wiederum dicht innerhalb der Gehäuseschalen 64, 65. Oberhalb des Zahnrades 66 ist ein Dosierrad 69 angeordnet, welches um eine im Gehäuse geeignet gelagerte Welle 68 drehbar ist. Desweiteren kann das Dosierrad 69 mittels einer Schubstange 72, die durch die Gehäuseschale 64 auf eine Stirnfläche des Dosierrades 69 ragt, entgegen der Kraft einer Druckfeder 73 aus dem kämmenden Eingriff beider Zahnkränze 70, 71 in ein seitlich an der Gehäuseschale 65 angeordnetes Gehäuseteil 67 verschoben werden. Dadurch entsteht oberhalb des Förderrades 66 ein veränderbarer Dosierraum 74 entsprechend der Deckung der Zahnkränze 70, 71 von Dosierrad 69 und Förderrad 66. Auf diese Weise kann höchst vorteilhaft die Fördermenge geschwindigkeitsabhängig dosiert werden.

Die Dosierräder müssen immer innerhalb der Bremsflüssigkeit laufen, damit keine Luft gefördert wird und Druckschwankungen entstehen. Deshalb sollte der Flüssigkeitsspiegel 16 oberhalb der Dosierräder 6, 7 bzw. 69 stehen.

## Patentansprüche

1. Hydraulische Bremse für Fahrzeuge, insbesondere Radbremse für Kraftfahrzeuge, mit einer Zahnradpumpe in einem Kreislauf für eine hydraulische Bremsflüssigkeit mit zwei innerhalb eines Gehäuses druckdicht kämmenden Zahnrädern (3, 4), von denen das erste Zahnrad (3) von der abzubremsenden Welle (5), insbesondere dem abzubremsenden Rad, antreibbar ist, mit einem Reservoir (44) für die Bremsflüssigkeit und mit einem Ventil in dem Kreislauf zum Verändern des zirkulierenden Flüssigkeitsstromes unter Abbremsen des Fahrzeuges und unter Umwandlung der kinetischen Energie desselben in potentielle Energie in Form von erhöhtem Druck der Bremsflüssigkeit und anschließender Abgabe der Wärmeenergie an die Atmosphäre, dadurch gekennzeichnet, daß die Rückleitung der Bremsflüssigkeit zum Reservoir (44) aus durch das zweite Zahnrad (4) und dessen Drehachse (26) geführten Kanälen (18-25) besteht und als Ventil zentrisch innerhalb des zweiten Zahnrades (4) ein beweglicher Kolben (33) angeordnet ist, der den Durchlaß der Kanäle mehr oder weniger sperrt oder freigibt.

2. Hydraulische Bremse nach Anspruch 1, gekennzeichnet durch folgende Merkmale :
a) die Kanäle innerhalb des zweiten Zahnrades (4) bestehen aus einer Anzahl von n Querlöchern (18, 19,20,21), die peripher in äquidistanten Abständen parallel zur Zahnradachse angeordnet sind und die mit einer gleichen Anzahl von Löchern (22, 23, 24, 25) in Verbindung stehen, die radial zum Mittelpunkt des Zahnrades verlaufen b) die Achse des zweiten Zahnrades (4) ist ein Zylinder (26), der fest im Gehäuse (1, 2) gehalten ist und der zentrisch eine Längsbohrung (51) und eine Anzahl von mindestens n + 1 Löchern aufweist, die radial gerichtet die Längsbohrung durchsetzen und die mit den radialen Löchern (22-25) des zweiten Zahnrades korrespondieren

c) der Kolben (33) ist innerhalb der Längsbohrung (51) des Zylinders (26) angeordnet und mittels einer Schubstange (82) gegen die Kraft einer Feder (53) verschieblich

d) das Gehäuse (1, 2) weist auf mindestens einer Innenseite Nuten (10, 11, 12, 75) auf, die sich mindestens in den obersten und untersten Mündungsbereich der Querlöcher (18-21) des zweiten Zahnrades (4) erstrecken, wobei die eine Nut (11, 12) mindestens ein Querloch mit dem Unterdruckraum (44) und die andere Nut (10, 75) mindestens das gegenüberliegende Querloch mit dem Druckraum (43) verbindet.

3. Hydraulische Bremse für Fahrzeuge mit Antiblockier-System nach Anspruch 2, gekennzeichnet durch folgende Merkmale :

a) der Kolben (33) weist zentrisch eine Längsbohrung (56) und eine Anzahl von n äquidistanten, radialen und die Längsbohrung durchsetzenden Löcher (34, 35, 36, 37) auf, die mit den radialen Löchern (27, 28, 29, 30, 31, 32) des Zylinders (26) beim Bremsvorgang korrespondieren

b) die Innenmündungen der radialen Löcher (34 bis 37) des Kolbens (33) belassen zwischen je benachbarten Löchern eine Sperrfläche (62)

c) in die Längsbohrung (56) des Kolbens (33) ragt eine Steuerwelle (38), auf der der Kolben längs verschiebbar ist und die im Bereich der Löcher (27-32) des Zylinders (26) eine Anzahl von n radialen, durchgehenden Löchern (39, 40) aufweist, die mit den Löchern (34-37) des Kolbens (33) korrespondieren, und deren Durchmesser kleiner als der Durchmesser der Sperrflächen (63) ist

d) die Steuerwelle (38) ist um einen Winkel von der Schließ-in die Durchgangsstellung drehbar gehalten.

4. Hydraulische Bremse nach Anspruch 3, dadurch gekennzeichnet, daß die radialen Löcher innerhalb des Zylinders (26) und innerhalb der Steuerwelle (38) Schlitze (27-32 ; 39, 40) sind.

5. Hydraulische Bremse mit Sperrdifferential nach den Ansprüchen 3 und 4, gekennzeichnet durch folgende Merkmale :

a) der Kolben (33) weist in zwei Querschnittsebenen übereinander liegende äquidistante, radiale und die Längsbohrung durchsetzende Löcher (34-37 ; 57-60) auf, wobei in Ruhestellung die radialen Löcher (57-60), in Bremsstellung die Löcher (34-37) mit den radialen Löchern (27-32) des Zylinders (26) korrespondieren

b) die Steuerwelle (38) besitzt in zwei verschiedenen Querschnittsebenen eine Anzahl von n radialen, äquidistanten und durchgehenden Löchern (39, 40 ; 61, 62), wobei die Löcher (39, 40) mit den Löchern (34-37) des Kolbens (33), die Löcher (61, 62) mit den radialen Löchern (57 bis 60) des Kolbens (33) korrespondieren und deren Durchmesser kleiner ist als der Durchmesser der Sperrflächen (63, 83) ist, wobei die Löcher (39, 40) der einen Querschnittsebene gegenüber den Löchern (61, 62) der anderen Querschnittsebenen um einen Winkel entsprechend der Anzahl der Löcher verdreht sind

c) die Steuerwelle (38) ist um einen Winkel oder um mehrere Schritte von der Schließ- in die Durchgangsrichtung drehbar gehalten

d) die Steuerwelle (38) ist durch den Kolben (33) bei translatorischer Bewegung mitnehmbar.

6. Hydraulische Bremse nach den Ansprüchen 1, 3 oder 5, dadurch gekennzeichnet, daß oberhalb mindestens eines der beiden Zahnräder (3, 4) ein mit diesem kämmendes Dosierrad (6, 7) abgedichtet im Gehäuse (1, 2) angeordnet ist, dessen Zahnkranz (46) eine peripher umlaufende Aussparung, insbesondere einen Einstich (47), aufweist.

7. Hydraulische Bremse nach Anspruch 6, dadurch gekennzeichnet, daß das Dosierrad (69) in axialer Richtung gegen die Kraft einer Feder (73) aus dem kämmenden Eingriff mit dem Förderzahnrad (6) heraus schiebbar gehalten ist.

8. Hydraulische Bremse nach einem der vorherigen Ansprüche, dadurch gekennzeichnet, daß das Dosierrad (6) einen Zahnkranz (49) mit geringerer Zahnhöhe als der Zahnkranz (50) des ersten Zahnrades (3) aufweist.

9. Hydraulische Bremse nach Anspruch 3 oder 5, dadurch gekennzeichnet, daß die Steuerwelle (38) von außen durch den Zylinder (26) in den Kolben (33) ragt und auf dem äußeren Ende derselben ein Schrittschaltmotor (76) angeordnet ist.

10. Verfahren zum Verhindern des Blockierens der Räder eines Fahrzeuges beim Bremsvorgang oder des Durchdrehens der Räder beim Beschleunigungsvorgang unter Verwendung der hydraulischen Bremse gemäß den Ansprüchen 3 oder 5, gekennzeichnet durch folgende Merkmale :

a) von den sich drehenden Zahnrädern wird eine elektrische Impulsfrequenz, vorzugsweise ein Impuls je Zahn, abgenommen und die Frequenz sämtlicher Zahnräder in einem elektronischen Rechner- und Regelschaltkreis gespeichert und miteinander verglichen

b) die Einleitung des Bremsvorganges erfolgt über den Kolben mit durch die Steuerwelle verschlossenem Durchgang

c) bei Abweichungen der Frequenzen der Räder voneinander wird die Steuerwelle des langsamer drehenden Zahnrades kurzzeitig auf Durchlaßrichtung gedreht

d) während dieser Zeit fließt im Rythmus der ABS-Frequenz ein Flüssigkeitsstrom durch den Kolben, bis die Frequenz dieses Zahnrades gleich den Frequenzen der übrigen Zahnräder ist, danach wird die Steuerwelle in Sperrrichtung geschaltet

e) die nach diesem Bremsvorgang erreichte Frequenz des Zahnrades wird mit der gespeicherten Geschwindigkeit des Fahrzeuges verglichen und bei Feststellung einer Differenz ein neuer ABS-Zyklus eingeleitet gemäß der Merkmale c und d) oder

f) bei Einleitung eines Beschleunigungsvorgangs steht die Steuerwelle in Durchlaßrichtung, der Kolben in Ruhestellung

g) bei Abweichung der Frequenz eines Zahnrades von den übrigen wird die Steuerwelle des zu schnell drehenden Zahnrades kurzzeitig entsprechend der Abweichung mehr oder weniger in Schließrichtung gedreht, bis die Frequenz des Zahnrades angepaßt ist, danach wird die Steuerwelle wieder in Durchlaßrichtung gedreht.

11. Verfahren nach Anspruch 10, dadurch gekennzeichnet, daß unterhalb einer vorgegebenen Geschwindigkeit der ABS-Frequenz eine intermittierende Schaltfrequenz durch die Steuerwelle überlagert wird.

12. Verfahren zum Verbessern der Straßenlage eines Fahrzeuges bei Kurvenfahrten unter Verwendung der hydraulischen Bremse gemäß den Ansprüchen 3 oder 5, gekennzeichnet durch folgende Merkmale :

a) von den sich drehenden Zahnrädern wird eine elektrische Impulsfrequenz, vorzugsweise ein Impuls je Zahn, abgenommen und die Frequenzen sämtlicher Zahnräder in einem elektronischen Rechner- und Regelschaltkreis gespeichert und miteinander verglichen

b) entsprechend dem Lenkeinschlag nach Richtung und Intensität wird ein elektrisches Signal erzeugt und dem Rechner- und Regelschaltkreis zugeführt

c) die Stellungen der Steuerwelle bezüglich der beiden Funktionen « Bremsen mit Kolben und ABS » oder « Beschleunigen als geregeltes selbstsperrendes Differential mit nicht starrer Verriegelung » sind voneinander unabhängig und beeinflussen sich nicht

d) entsprechend dem Lenkeinschlag und gegebenenfalls zusätzlich zur Geschwindigkeit des Fahrzeuges wird die Steuerwelle des Sperrdifferentials der Bremse des oder der treibenden Räder und/oder des oder der angetriebenen Räder proportional in Sperrichtung gedreht

e) bei gegebenenfalls zusätzlich eingeleitetem Bremsvorgang erfolgt dieser über den Kolben mit den Merkmalen c) bis e) des Anspruchs 11 unter Überlagerung der Bremsvorgänge des vorangehenden Merkmals d).

13. Hydraulische Bremse nach den Ansprüchen 3 oder 5, dadurch gekennzeichnet, daß je eine Steuerwelle mit getrenntem Schrittschaltmotor für beide Funktionen « Bremsen mit Kolben und ABS » und « Beschleunigen als geregeltes selbstsperrendes Differential mit nicht starrer Verriegelung » vorhanden sind.

14. Hydraulische Bremse nach Anspruch 13, dadurch gekennzeichnet, daß eine Steuerwelle mit voneinander unabhängigen Durchgängen für beide Funktionen vorhanden ist und der Schrittschaltmotor eine Mittelstellung besitzt, bei der der Kolben inaktiv und der Durchgang für das Sperrdifferential geöffnet ist und die Steuerwelle links- oder rechtsdrehend aktivierbar ist.

15. Hydraulische Bremse nach Anspruch 1, dadurch gekennzeichnet, daß das Gehäuse zur Kühlung wassergekühlt ist und innerhalb eines Wasserkühlkreislaufs angeordnet ist.

## Claims

1. A hydraulic brake for vehicles, in particular wheel brake for automobiles, comprising a gear pump in a cycle for a hydraulic brake liquid with two gear wheels (3, 4) meshing pressure-tight within a housing, the first (3) of said gear wheels being driven by the shaft (5) to be braked, in particular the wheel to be braked, comprising a reservoir (44) for the brake liquid and a valve in the cycle for varying the circulating liquid flow under slowing the vehicle down and under transformation of the kinetic energy of the latter into potential energy in form of increased pressure of the brake liquid and subsequent delivery of heat energy to the atmosphere, characterized by that the return line of the brake liquid to the reservoir (44) consists of channels (18-25) conducted through the second gear wheel (4) and through its axle (26), and that, as valve, a movable piston (33) is provided centrally within the second gear wheel (4), said piston (33) blocking or clearing the passage of the channels more or less.

2. Hydraulic brake according to claim 1, characterized by the following features :

a) the channels within the second gear wheel (4) consist of a number n of transverse holes (18, 19, 20, 21) being arranged peripherally in equally spaced locations parallel to the gear wheel axle and being connected to an identical number of holes (22, 23, 24, 25) extending radially to the centre of the gear wheel

b) the axle of the second gear wheel (4) is a cylinder (26) being mounted firmly in the housing (1, 2) and having centrally a longitudinal bore (51) and a number of at least n + 1 holes extending radially through the longitudinal bore and corresponding with the radial holes (22-25) of the second gear wheel

c) the piston (33) is mounted within the longitudinal bore (51) of the cylinder and is displaceable with respect to the latter by means of a push rod (82) against the force of a spring (53)

d) the housing (1, 2) is provided at least on one inner wall with grooves (10, 11, 12, 75) extending at least in the uppermost and lowermost orifice areas of transverse holes (18-21) of the second gear wheel (4), the one groove (11, 12) connecting at least one transverse hole with the underpressure space (44) and the other groove (10, 75) connecting at least the opposite transverse hole with the pressure space (43).

3. Hydraulic brake for vehicles with anti-blocking system according to claim 2, characterized by the following features :

a) the piston (33) has a central longitudinal bore (56) and a number of n equally spaced, radial holes (34, 35, 36, 37) extending through the longitudinal bore, said holes corresponding with the radial holes (27, 28, 29, 30, 31, 32) of the cylinder (26) in a slowing-down process b) the inner orifices of the radial holes (34 to 37) of the piston (33) leave a blocking surface (62) free between adjacent holes

c) into the longitudinal bore (56) of the piston (33) extends a control shaft (38), on which the piston is displaceable longitudinally and which is provided in the area of the holes (27-32) of the cylinder (26) a number of n radial, passing-through holes (39, 40) corresponding with the holes (34-37) of the piston (33), and the diameter of which being smaller than the diameter of the blocking surfaces (63)

d) the control shaft (38) is pivoted by an angle from the close position into the clear position.

4. Hydraulic brake according to claim 3, characterized by that the radial holes within the cylinder (26) and within the control shaft (38) are slots (27-32 ; 39, 40).

5. Hydraulic brake with differential lock according to claims 3 and 4, characterized by the following features :

a) the piston (33) has in two cross-sectional planes equally spaced, radial holes (34-37 ; 57-60) arranged above each other and passing through the longitudinal bore, in normal position, the radial holes (57-60), and in brake position, the holes (34-37) corresponding with the radial holes (27-32) of the cylinder (26)

b) the control shaft (38) has in two different cross-sectional planes a number of n radial, equally spaced and passing-through holes (39, 40 ; 61, 62), the holes (39, 40) corresponding with the holes (34-37) of the piston (33) and the holes (61, 62) corresponding with the radial holes (57 to 60) of the piston (33), and the diameter of which is smaller than the diameter of the blocking surfaces (63, 83), the holes (39, 40) of the one cross-sectional plane being turned with respect to the holes (61, 62) of the other cross-sectional planes by an angle corresponding to the number of holes

c) the control shaft is (38) is pivoted by an angle or by several steps from the close direction to the clear direction

d) the control shaft (38) can be driven by the piston (33) in translatory movement.

6. Hydraulic brake according to claims 3 or 5, characterized by that above at least one of the two gear wheels (3, 4), a dosing wheel (6, 7) meshing therewith is arranged sealed in the housing (1, 2), the gear rim (46) of which has a peripheral recess, in particular a pass (47).

7. Hydraulic brake according to claim 6, characterized by that the dosing wheel (69) is mounted displaceably in axial direction against the force of a spring (73) out off the meshing engagement with the feed gear wheel (6).

8. Hydraulic brake according to one of the preceding claims, characterized by that the dosing wheel (6) has a gear rim (49) having a lower depth of tooth than the gear rim (50) of the first gear wheel (3).

9. Hydraulic brake according to claims 3 or 5, characterized by that the control shaft (38) protrudes from outside through the cylinder (26) into the piston (33), and that on its outer end. a stepper motor (76) is disposed.

10. Method for preventing a blocking of the wheels of a vehicle when slowing-down or a turning-over of the wheels when speeding-up under application of the hydraulic brake according to claims 3 or 5, characterized by the following features :

a) from the rotating gear wheels, an electrical pulse frequency, preferably one pulse per tooth, is picked-up, and the frequency of all gear wheels is stored in an electronic computing and regulating circuit and is compared to each other

b) initiation of the slowing-down process is effected over the piston with the passage being closed by the control shaft

c) in case of deviations of the frequencies of the wheels from each other, the control shaft of the gear wheel rotating slower is temporarily switched to clear direction

d) during this period of time, a liquid flow passes through the piston in the rhythm of the ABS frequency, until the frequency of this gear wheel is identical to the frequencies of the other gear wheels, then the control shaft is switched to close direction

e) the frequency of the gear wheel reached after this slowing-down process is compared to the stored speed of the vehicle, and in case of a difference, a new ABS cycle is initiated according to features c) and d) or

f) when initiating a speeding-up process, the control shaft is in clear direction, the piston in rest position

g) in case of a deviation of the frequency of a gear wheel from the others, the control shaft of the gear wheel rotating too fast is switched more or less, according to the deviation, into close direction, until the frequency of the gear wheel is adapted, then the control shaft is readjusted to clear direction.

11. Method according to claim 10, characterized by that below a predetermined speed, an intermittent switching frequency is superimposed to the ABS frequency by the control shaft.

12. Method for improving the road holding capacity of a vehicle when driving in curves under application of the hydraulic brake according to claims 3 or 5, characterized by the following features :

a) from the rotating gear wheels, an electrical pulse frequency, preferably one pulse per tooth, is picked-up, and the frequencies of all gear wheels are stored in an electronic computing and regulating circuit and are compared to each other

b) corresponding to the angle of turn with respect to direction and intensity, an electrical signal is generated and is fed to the computing and regulating circuit

c) the positions of the control shaft with respect to the two functions « braking with piston and ABS » or « speeding-up as controlled self-locking differential with non-rigid lock » are independent from each other and do not affect each other

d) corresponding to the angle of turn and, if applicable, in addition to the speed of the vehicle, the control shaft of the differential lock of the brake of the driving wheel or wheels and/or of the driven wheel or wheels is turned proportionally into close direction

e) in case of an eventually additional braking process, this will be effected over the piston having the features c) to e) of claim 11 under superposition of the braking processes of the preceding feature d).

13. Hydraulic brake according to claims 3 or 5, characterized by that one control shaft each with separate stepper motor for both functions « braking with piston and ABS » and « speeding-up as controlled self-locking differential with non-rigid lock » is provided.

14. Hydraulic brake according to claim 13, characterized by that a control shaft is present with passages independent from each other for both functions, and that the stepper motor is provided with a central position, in which the piston is inactive, and the passage for the differential lock is open, and the control shaft can be activated left- or right-turning.

15. Hydraulic brake according to claim 1, characterized by that for cooling, the housing is water-cooled and is arranged within a water-cooling cycle.


**Revendications**

1. Frein hydraulique pour véhicules, en particulier frein sur roue pour véhicules automobiles, du type comprenant une pompe à engrenages dans un cycle pour un liquide de frein hydraulique avec deux roues dentées (3, 4) s'engrenant en manière étanche à l'intérieur d'un boîtier, la première roue dentée (3) étant entraînable par l'arbre (5) à freiner, en particulier roue à freiner, un réservoir (44) pour le liquide de frein et une soupape dans le cycle pour la variation du courant de liquide circulant sous freinage du véhicule et sous transformation de l'énergie cinétique de celui-ci en énergie potentielle en façon d'augmentation de pression dans le liquide de frein et de dégagement suivant d'énergie thermique à l'atmosphère, caractérisé en ce que la conduite de retour du liquide de frein au réservoir (44) se compose de canaux (18-25) conduits à travers de la deuxième roue (4) et de son arbre (26), et que, comme soupape, centralement à l'intérieur de la deuxième roue (4), un piston (33) amovible est arrangé, bloquant ou débloquant plus ou moins le passage à travers des canaux.

2. Frein hydraulique selon la revendication 1, caractérisé par les caractéristiques suivantes :

a) les canaux à l'intérieur de la deuxième roue (4) se composent d'un nombre de n trous transversaux (18, 19, 20, 21) étant disposés périphériquement en distances équidistantes parallèlement à l'arbre de la roue dentée et étant communiqués avec un nombre identique de trous (22, 23, 24, 25) s'étendant radialement vers le centre de la roue dentée

b) l'arbre de la deuxième roue (4) est un cylindre (26) fixé dans le boîtier et présentant centralement une forure longitudinale (51) et un nombre d'au moins n + 1 trous dirigés radialement et traversant ladite forure longitudinale et correspondant aux trous radiaux (22-25) de la deuxième roue dentée

c) le piston (33) est disposé à l'intérieur de la forure longitudinale (51) du cylindre (26) et est déplaçable au moyen d'une bielle (82) contre la force d'un ressort (53)

d) le boîtier (1, 2) présente au moins sur une paroi latérale des rainures (10, 11, 12, 75) s'étendant au moins dans les zones d'embouchure des trous transversaux (18-21) de la deuxième roue (4), une rainure (11, 12) reliant au moins un trou transversal avec le volume à dépression (44), et l'autre rainure (10, 75) reliant le trou transversal opposé avec le volume à pression (43).

3. Frein hydraulique pour véhicules avec système d'antiblocage selon la revendication 2, caractérisé par les caractéristiques suivantes :

a) le piston (33) est pourvu centralement d'une forure longitudinale (56) et d'un nombre de n trous équidistants et radiaux (34, 35, 36, 37), ces trous traversant ladite forure longitudinale et correspondant aux trous radiaux (27, 28, 29, 30, 31) du cylindre (26) lors d'un freinage

b) les embouchures intérieures des trous radiaux (34 a 37) du piston gardent une surface de blocage (62) entre trous voisins

c) dans la forure longitudinale (56) du piston (33) s'étend un arbre de commande (38), sur lequel le piston est déplaçable longitudinalement et qui présente dans la zone des trous (27-32) du cylindre (26) un nombre de n trous radiaux et traversants (39, 40), ces trous correspondant aux trous (34-37) du piston (33) et dont le diamètre est inférieur au diamètre des surfaces de blocage (63)

d) l'arbre de commande (38) est logé pivotant par un angle de la position de fermeture en la position de passage.

4. Frein hydraulique selon la revendication 3, caractérisé en ce que les trous radiaux à l'intérieur du cylindre (26) et à l'intérieur de l'arbre de commande sont des fentes (27-32 ; 39, 40).

5. Frein hydraulique avec différentiel à autoblocage selon les revendications 3 et 4, caractérisé par les caractéristiques suivantes :

a) le piston (33) est pourvu en deux plans en coupe transversale des trous (34-37 ; 57-60) équidistants et radiaux. ces trous posés l'un sur l'autre et passant par la forure longitudinale, en position de repos, les trous radiaux (57-60), et en position de freinage, les trous (34-37) correspondant aux trous (27-32) du cylindre (26)

b) l'arbre de commande (38) est pourvu en deux plans différents en coupe transversale un nombre de n trous (39, 40 ; 61, 62) équidistants et radiaux et traversants, les trous (39, 40) correspondant aux trous (34-37) du piston (33), les trous (61, 62) correspondant aux trous radiaux (57 à 60) et dont le diamètre est inférieur au diamètre des surfaces de blocage (63, 83), les trous (39, 40) de l'un plan en coupe transversale étant tourné par rapport aux trous (61, 62) des autres plans en coupe transversale par un angle correspondant au nombre des trous

c) l'arbre de commande (38) est logé pivotant par un angle ou par plusieurs pas de la direction de fermeture en la direction de passage

d) l'arbre de commande (38) est entraînable par le piston (33) au mouvement de translation.

6. Frein hydraulique selon les revendications 1, 3 ou 5, caractérisé en ce qu'au moins une des deux roues dentées (3, 4), une roue doseuse (6, 7) s'engrenant avec celle-ci est disposée en manière étanche dans le boîtier (1, 2), l'anneau denté (46) de ladite roue doseuse (6, 7) présentant un évidement périphérique, en particulier une encoche (47).

7. Frein hydraulique selon la revendication 7, caractérisé en ce que la roue doseuse (69) est logée déplaçable en direction axiale contre la force d'un ressort (73) hors de l'engrènement avec la roue dentée d'alimentation (6).

8. Frein hydraulique selon une des revendications précédentes, caractérisé en ce que la roue doseuse (6) présente un anneau denté (49) d'une hauteur de la dent inférieure à celle (50) de la première roue dentée (3).

9. Frein hydraulique selon la revendication 3 ou 5, caractérisé en ce que l'arbre de commande (38) s'étend de l'extérieur à travers du cylindre (26) dans le piston (33) et qu'à son extrémité un moteur pas à pas (76) est disposé.

10. Méthode pour empêcher le blocage des roues d'un véhicule lors de freinage ou le patinage des roues lors d'accélération sous utilisation du frein hydraulique selon les revendications 3 ou 5, caractérisée par les caractéristiques suivantes :

a) par les roues dentées tournantes, une fréquence d'impulsions électrique, en particulier une impulsion par dent, est délivrée, et les fréquences de toutes les roues dentées sont mises en mémoire dans un circuit électronique de calculation et de régulation et sont comparées l'une à l'autre

b) le déclenchement du freinage est effectué par l'intermédiaire du piston avec passage fermé par l'arbre de commande

c) lors de déviations des fréquences des roues l'une de l'autre, l'arbre de commande de la roue dentée plus lente est commuté temporairement à direction de passage

d) pendant ce temps, un courant de liquide passe par le piston au rythme de la fréquence SAB, jusqu'à ce que la fréquence de cette roue soit identique aux fréquences des autres roues dentées, puis l'arbre de commande est commuté à direction de blocage

e) la fréquence de la roue dentée atteinte après ce freinage est comparée à la vitesse mise en mémoire du véhicule, et en cas d'une différence, un nouveau cycle SAB est déclenché selon les caractéristiques c) et d) ou

f) lors de déclenchement d'une accélération, l'arbre de commande est en direction de passage, le piston en position de repos

g) en cas d'une déviation de la fréquence de la roue dentée des autres fréquences, l'arbre de commande de la roue trop rapide est tourné temporairement à direction de fermeture plus ou moins selon la déviation, jusqu'à ce que la fréquence de la roue dentée soit adaptée, puis l'arbre de commande est retourné à direction de passage.

11. Méthode selon la revendication 10, caractérisée en ce qu'au-dessous d'une vitesse prédéterminée de la fréquence SAB, une fréquence intermittente de commutation est superposée par l'arbre de commande.

12. Méthode pour améliorer la tenue en route d'un véhicule en virages sous utilisation du frein hydraulique selon les revendications 3 ou 5, caractérisée par les caractéristiques suivantes :

a) par les roues dentées tournantes, une fréquence d'impulsions électriques, de préférence une impulsion par dent, est délivrée, et les fréquences de toutes les roues dentées sont mises en mémoire dans un circuit électronique de calculation et de régulation et sont comparées l'une à l'autre

b) selon l'actionnement de la direction à volant en direction et intensité, un signal électrique est engendré et est amené au circuit de calculation et de régulation

c) les positions de l'arbre de commande par rapport aux deux fonctions « freiner avec piston et SAB » ou « accélérer comme différentiel régulé à autoblocage avec verrouillage non rigide » sont indépendantes l'une de l'autre et ne s'influent pas

d) selon l'actionnement de la direction à volant et, si applicable, en addition à la vitesse du véhicule, l'arbre de commande du différentiel à autoblocage du frein de la roue entraînante ou des roues entraînantes et/ou de la roue traînée ou des roues traînées est tourné proportionnellement en direction de fermeture

e) lors d'un freinage déclenche éventuellement en addition, celui-ci s'effectue par l'intermédiaire du piston avec les caractéristiques c) à e) de la revendication 11 sous superposition des freinages selon la caractéristique d) précédente.

13. Frein hydraulique selon les revendications 3 ou 5, caractérisé en ce qu'un arbre de commande avec moteur pas à pas séparé pour toutes les deux fonctions « freiner avec piston et SAB » et « accélérer comme différentiel régulé à autoblocage avec verrouillage non rigide » est prévu.

14. Frein hydraulique selon la revendication 13, caractérisé en ce qu'un arbre de commande avec passages indépendants l'un de l'autre pour les deux fonctions est prévu, et que le moteur pas à pas présente une position centrale, dans laquelle le piston est inactif et le passage pour le différentiel à autoblocage est ouvert et l'arbre de commande peut être rendu actif en tournant à gauche ou à droite.

15. Frein hydraulique selon la revendication 1, caractérisé en ce que le boîtier est refroidi par l'eau et est disposé à l'intérieur d'un cycle d'eau de refroidissement.

Fig.1

EP 0 141 069 B1

A—A

**Fig.2**

**Fig. 3**

**Fig. 4**

a     b

**Fig. 7**

Fig. 5

Fig. 6